# EUROPÄISCHE PATENTSCHRIFT

(11) **EP 2 999 860 B1**
(45) Veröffentlichungstag und Bekanntmachung des Hinweises auf die Patenterteilung: **14.02.2018**
(21) Anmeldenummer: 14723664.0
(22) Anmeldetag: 31.03.2014
(51) Int. Cl.: F01D 25/30, F16K 11/052

(54) **GASWEICHE**
GAS FLOW DIVERTER
DÉFLECTEUR DE COURANTS GAZEUX

(30) Priorität: 22.05.2013 AT 4262013
(43) Veröffentlichungstag der Anmeldung: 30.03.2016
(73) Patentinhaber: FIVEWATER GmbH, 6890 Lustenau (AT)
(72) Erfinder: PROCHAZKA, Peter Alexander, A-69152 Hörbranz (AT)
(74) Vertreter: Hofmann, Ralf U.
(86) Internationale Anmeldenummer: PCT/AT2014/000064
(87) Internationale Veröffentlichungsnummer: WO 2014/186811

(56) Entgegenhaltungen:
- CN-Y- 201 184 431
- FR-A1- 2 509 417
- FR-A1- 2 955 646
- JP-U- S50 128 131
- US-A- 5 464 370

## Beschreibung

Die vorliegende Erfindung betrifft eine Gasweiche, für den Gasstrom einer Abgasleitung einer Gasturbine, mit einer mittels eines Antriebsmotors um eine Drehachse zwischen einer ersten und einer zweiten Schließstellung verschwenkbaren Klappe, wobei die Klappe bei ihrer Verschwenkung von der ersten in die zweite Schließstellung einen Schwenkwinkel überstreicht.

Gasweichen dienen dem Zweck, den die Gasturbine eines Gasturbinenkraftwerks verlassenden Abgasstrom entweder einer ersten und/oder zweiten Austrittsöffnung zuzuführen. Häufig ist anschließend an die erste Austrittsöffnung der Gasweiche eine Abgasleitung zur Weiterleitung des Gasstromes zu einem Abhitzekessel und an die zweite Austrittsöffnung der Abgaskamin des Gasturbinenkraftwerks angeschlossen. Der Abhitzekessel dient der Erzeugung von Prozessdampf und/oder der Erzeugung von Dampf für den Antrieb einer Dampfturbine. Solche Kraftwerke werden auch als Gas- und Dampfturbinen-Kombinationskraftwerke bezeichnet.

Neben dem vollständigen Anliegen der Klappe in einer der beiden Schließstellungen der Gasweiche ist es auch möglich, die Klappe gezielt zwischen diesen beiden Schließstellungen zu positionieren, um die durch die jeweilige Austrittsöffnung strömende Gasstrommenge zu beeinflussen. Der aus einer Gasturbine austretende Gasstrom kann Maximaltemperaturen zwischen 480° C und 620° C aufweisen, wodurch eine hohe thermische Belastung, insbesondere bei Kaltstarts, auf die Bauteile der Gasweiche einwirkt.

Die US 4,821,507 schlägt eine Gasweiche vor, bei der die Klappe durch einen im Abgasstrom liegenden Hebelmechanismus zwischen den Schließstellungen verschwenkt wird. In Betriebsphasen in welchen der Hebelmechanismus vom Abgasstrom der Gasturbine umströmt wird, unterliegt dieser einer großen thermischen Belastung. Die unterschiedliche Längenausdehnung der Bauteile des Hebelmechanismus führt zu einer Vergrößerung des Lagerspiels in den Gelenken des Hebelmechanismus, was insbesondere bei Betriebsphasen, in welchen die Klappe zwischen den beiden Schließstellungen positioniert wird, zu Vibrationen und in weiterer Folge zu Schwingungsbrüchen führen kann.

Aus der DE 197 18 147 A1 ist eine Gasweiche bekannt, bei welcher die Klappe exzentrisch an einer Welle angeordnet ist. Die Welle durchdringt das Gehäuse der Gasweiche und wird direkt von einem daran angeflanschten Getriebemotor angetrieben. Die Anzahl der im Abgasstrom befindlichen, beweglichen Bauteile ist im Vergleich zur US 4,821,507 wesentlich geringer. Aufgrund der Längenausdehnung des Teiles der Welle, welcher sich im Abgasstrom befindet, müssen Maßnahmen zur Kompensation dieser Ausdehnung getroffen werden, um den Getriebemotor vor Beschädigung zu schützen. FR2955646 und JP S50128131U offenbaren Gasweichen einer Gasturbine. Die die Gasturbine verlassende Gasstrommenge kann in der Praxis über 1.600 m³/s betragen. Die Auslegungsdrücke liegen zwischen 50 mbar und 80 mbar. Insbesondere das Verschwenken der Klappe bei Volllast aus ihrer vertikalen Schließstellung ist ein entscheidendes Auslegungskriterium für den Antrieb. Aus diesem Grund sind in der Praxis insbesondere bei Gasweichen mit großen Abmessungen hydraulische Antriebe erforderlich, welche die nötigen Öffnungsmomente aufbringen, um die Klappe ausgehend von ihrer jeweiligen Schließstellung in Richtung zu ihrer anderen Schließstellung zu verschwenken, und welche eine ausreichende Schwenkgeschwindigkeit der Klappe zwischen der ersten und zweiten Schließstellung bereitstellen können. Neben den hohen Investitionskosten für die Hydraulikaggregate und -bauteile und dem Aufwand zur Ansteuerung der Hydraulikkomponenten ist auch der Betrieb kostenintensiv, da die Hydraulikaggregate während der gesamten Betriebszeit des Kraftwerks aktiv sind und somit beträchtliche Mengen an Energie verbrauchen.

Aufgabe der Erfindung ist es, eine verbesserte Gasweiche der eingangs genannten Art mit relativ geringem erforderlichem Öffnungsmoment zum Verschwenken der Klappe ausgehend von ihrer jeweiligen Schließstellung zu realisieren und einen effizienten Betrieb der Gasweiche zu ermöglichen.

Erfindungsgemäß gelingt dies durch eine Gasweiche mit dem Merkmal des Anspruchs 1.

Bei einer Gasweiche gemäß der Erfindung weist die Gasweiche mindestens ein an einem Hebelarm angeordnetes Gegengewicht zur Ausübung eines auf die Klappe um die Drehachse wirkenden Drehmoments auf. In einer jeweiligen der Schließstellungen ergibt die Summe des vom Eigengewicht der Klappe hervorgerufenen Drehmoments und des vom Eigengewicht des Gegengewichts hervorgerufenes Drehmoments ein Drehmoment, welches im Sinne einer Verdrehung der Klappe um die Drehachse der Klappe in Richtung zur jeweils anderen Schließstellung wirkt. In einer Zwischenstellung zwischen den beiden Schließstellungen der Klappe liegt aufgrund des Eigengewichts der Klappe und des Gegengewichts eine gemeinsame stabile Gleichgewichtslage vor, welche in einem Winkelbereich von +/- 30° ausgehend von der Winkelhalbierenden des Schwenkwinkels der Klappe zwischen erster und zweiter Schließstellung liegt.

Die gemeinsame stabile Gleichgewichtslage in der Zwischenstellung zwischen den beiden Schließstellungen der Klappe bedeutet, dass sich die Drehmomente aufgrund des Eigengewichts der Klappe und aufgrund des Eigengewichts des Gegengewichts in der Zwischenstellung aufheben, wobei bei Abweichungen der Klappenstellung von der Gleichgewichtslage aufgrund des Eigengewichts der Klappe und des Eigengewichts des Gegengewichts ein Drehmoment in Richtung zur Zwischenstellung erzeugt wird.

Durch das am Hebelarm angeordnete Gegengewicht kann ein Teil des Eigengewichts der Klappe kompensiert werden. Im Weiteren kann durch das in einer jeweiligen Schließstellung in Richtung zur jeweils anderen Schließstellung wirkende Drehmoment, welches durch das Eigengewicht der Klappe in Kombination mit dem Eigengewicht des Gegengewichts hervorgerufen wird, bei einer Verschwenkung der Klappe ausgehend von der jeweiligen Schließstellung das Losbrechen der Klappe aus ihrer jeweiligen Schließstellung (= erforderliches Öffnungsmoment) unterstützt werden. Durch die Erfindung kann somit eine beträchtliche Reduktion der erforderlichen Antriebsleistung erreicht werden.

Damit kann in vorteilhaften Ausbildungsformen der Erfindung auf einen hydraulischen Antrieb verzichtet werden und mit einem elektrischen Antriebsmotor das Auslangen gefunden werden. In vorteilhaften Ausgestaltungsformen der Erfindung ist vorgesehen, dass der Antriebsmotor ein Elektromotor ist, welcher in seiner Anschaffung wesentlich günstiger und im Betrieb wartungsfreundlich ist. Der Elektromotor ist im Unterschied zum im Stand der Technik verwendeten Hydraulikantrieb nur dann in Betrieb, wenn eine Verstellung der Klappe gewünscht ist. Elektromotoren und insbesondere bevorzugte kombinierte Getriebe- und Elektromotoreneinheiten werden in standardisierten Bauformen produziert und sind im Fehlerfall rasch austauschbar.

Vorteilhafterweise liegt die gemeinsame Gleichgewichtslage der Klappe und des Gegengewichts in einem Winkelbereich von +/- 15°, ausgehend von der Winkelhalbierenden des Schwenkwinkels der Klappe.

Eine vorteilhafte Ausgestaltungsform der Erfindung sieht vor, dass der Hebelarm, an welchem das Gegengewicht angebracht ist, um die Drehachse der Klappe drehbar gelagert ist. In anderen Worten sind also die Schwenkachse des Hebelarms und die Drehachse der Klappe koinzident. Besonders bevorzugt ist hierbei, dass die Gasweiche eine um die Drehachse der Klappe verdrehbare Welle aufweist, wobei die Klappe und der Hebelarm verdrehstarr mit der Welle verbunden sind. Es ist allerdings auch denkbar und möglich, dass der Hebelarm um eine von der Drehachse der Klappe unterschiedliche Schwenkachse drehbar gelagert ist, welche aber vorzugsweise parallel zur Drehachse der Klappe liegt. Es ist dann mindestens ein Getriebeglied zur Kopplung des Hebelarms mit der Klappe vorhanden.

Günstig ist es, wenn die Klappe in der ersten Schließstellung eine zumindest im Wesentlichen vertikale Stellung aufweist. Vorzugsweise ist dabei vorgesehen, dass der Schwerpunkt der Klappe, in Richtung der Drehachse der Klappe gesehen, innerhalb eines Winkelbereichs von maximal +/- 5° von einer Lage vertikal unterhalb der Drehachse der Klappe abweicht.

In vorteilhaften Ausgestaltungsformen der Erfindung weist die Klappe eine erste Dichtfläche zur Anlage an einem ersten Dichtsitz in der ersten Schließstellung und eine zweite Dichtfläche zur Anlage an einem zweiten Dichtsitz in der zweiten Schließstellung der Klappe auf, wobei die erste Dichtfläche in der ersten Schließstellung der Klappe vorzugsweise zumindest im Wesentlichen in der Vertikalen liegt. Der erste Dichtsitz umgibt eine erste Austrittsöffnung und der zweite Dichtsitz eine zweite Austrittsöffnung der Gasweiche. In einer anderen Ausführungsvariante kann vorgesehen sein, dass die erste und zweite Dichtfläche am jeweiligen Dichtsitz angeordnet sind, wobei die erste Dichtfläche vorzugsweise zumindest im Wesentlichen in der Vertikalen liegt.

Mit der jeweiligen Dichtfläche wirkt vorteilhafterweise eine Lamellendichtung zusammen, wobei die Dichtfläche und die Lamellendichtung einen Sperrluftkanal ausbilden. Der Sperrluftkanal wird mit Sperrluft beaufschlagt, welche gegenüber dem Abgasstrom einen höheren Druck besitzt und daher den Durchtritt von Abgasen durch die verschlossene Austrittsöffnung verhindert. Vorzugsweise sind die Lamellendichtungen somit am Dichtsitz angeordnet und wirken mit an der Klappe angeordneten Dichtflächen zusammen. Es ist aber auch möglich, die Lamellendichtungen an der Klappe anzuordnen und die Dichtflächen am Dichtsitz vorzusehen.

Vorteilhafterweise ist die Klappe über zumindest ein Getriebeglied mit dem Antriebsmotor mechanisch gekoppelt. Besonders günstig ist es in diesem Zusammenhang, wenn das Getriebeglied außerhalb des Gehäuses der Gasweiche angeordnet ist, um die Längenausdehnung der vom heißen Abgasstrom beaufschlagten Komponenten zu kompensieren.

Vorzugsweise ist zur Verbindung der Klappe mit dem Antriebsmotor zumindest eine Koppelstange vorgesehen. Mit Koppelstange wird im Sinne der Erfindung ein an beiden Enden gelenkig gelagerter Bauteil bezeichnet, der planmäßig nur auf Zug bzw. Druck beansprucht wird.

Weitere Merkmale und Einzelheiten bevorzugter Ausgestaltungsformen der Erfindung werden anhand der Zeichnungen erläutert. Es zeigen:
Fig. 1 eine Übersichtsskizze eines möglichen Einbauortes einer erfindungsgemäßen Gasweiche in einer Abgasleitung einer Gasturbine;
Fig. 2 eine isometrische Darstellung einer erfindungsgemäßen Gasweiche, die Klappe in einer Zwischenstellung;
Fig. 3 Ansicht A gemäß Fig. 2;
Fig. 4 den Schnitt B-B gemäß Fig. 3;
Fig. 5 Ansicht D gemäß Figur 2;
Fig. 6 eine isometrische Darstellung gemäß Fig. 2 ohne Gehäuse;
Fig. 7 die Ansicht C gemäß Fig. 6;
Fig. 8 bis 11 Darstellungen analog zu den Fig. 4 bis 7, die Klappe in der ersten Schließstellung;
Fig. 12 bis 14 Darstellungen analog zu den Fig. 4 bis 7, die Klappe in der zweiten Schließstellung und
Fig. 16 bis 18 ein zweites Ausführungsbeispiel mit der Klappe in einer Zwischenstellung, in der ersten Schließstellung und in der zweiten Schließstellung.

Zum Zwecke der Übersichtlichkeit wurde in den Darstellungen darauf verzichtet, sämtliche Bezugszeichen in allen Figuren einzuzeichnen.

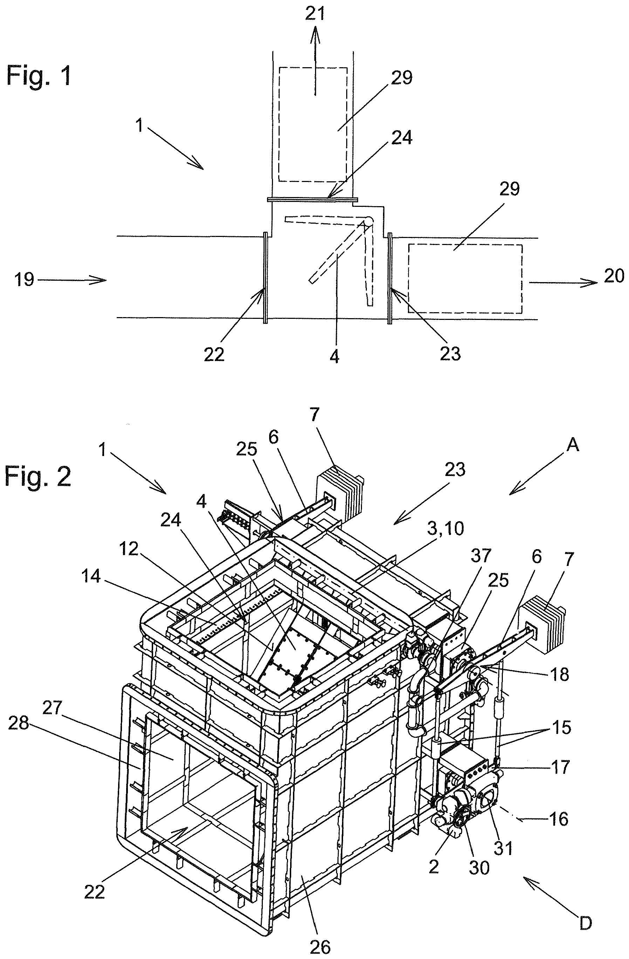

Die Fig. 1 zeigt eine Übersichtsskizze mit dem Einbauort einer erfindungsgemäßen Gasweiche 1 in einer Abgasleitung einer Gasturbine. Mit Hilfe der Klappe 4 der Gasweiche 1 ist es möglich, den Gasstrom einer Gasturbine mit der bezogen auf die Gasweiche 1 bezeichneten Einströmrichtung 19, je nach Stellung der Klappe 4, in eine erste Ausströmrichtung 20 und/oder eine zweite Ausströmrichtung 21 überzuführen. Stromaufwärts der Einströmrichtung 19 befindet sich die Gasturbine, die der Umwandlung von chemischer Energie in elektrische Energie dient. In Fig. 1 sind außerdem mögliche Einbaulagen für Schalldämpfer 29 ersichtlich. Stromabwärts an die erste Ausströmrichtung 20 kann sich ein Abhitzekessel zur Erzeugung von Wasserdampf befinden. Stromabwärts an die zweite Ausströmrichtung 21 befindet sich in der Regel der Abgaskamin eines Gaskraftwerkes. Da Gaskraftwerke prinzipbedingt hohe Abgastemperaturen aufweisen, dienen der Abhitzekessel und die mit dem im Abhitzekessel erzeugten dampfbetriebenen Dampfturbinen wesentlich der Wirkungsgradsteigerung der Gesamtanlage. Wie bereits angedeutet, kann die Klappe 4 auch zur gezielten Regelung der Gasstrommenge, die die Gasweiche 1 in die erste Ausströmrichtung 20 bzw. in die zweite Ausströmrichtung 21 verlässt, verwendet werden.

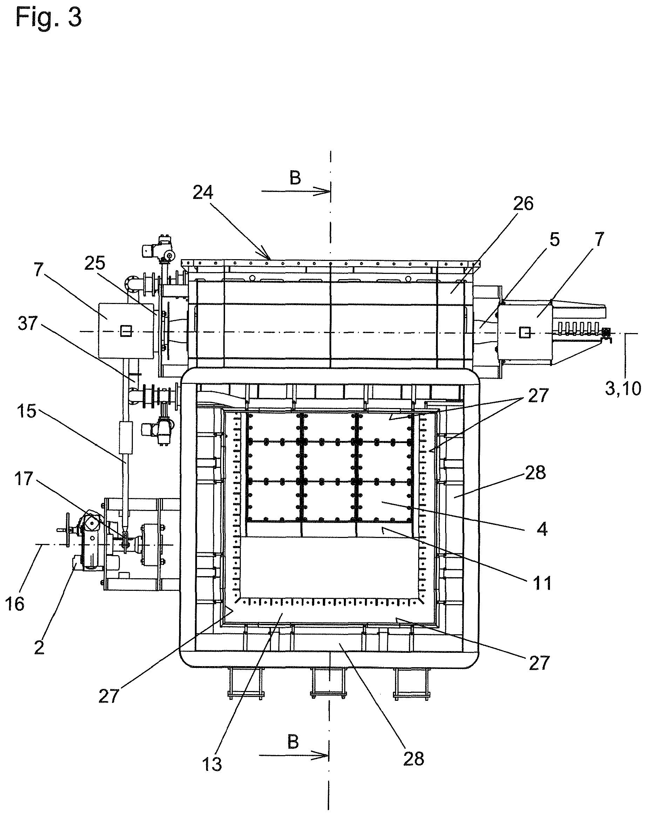

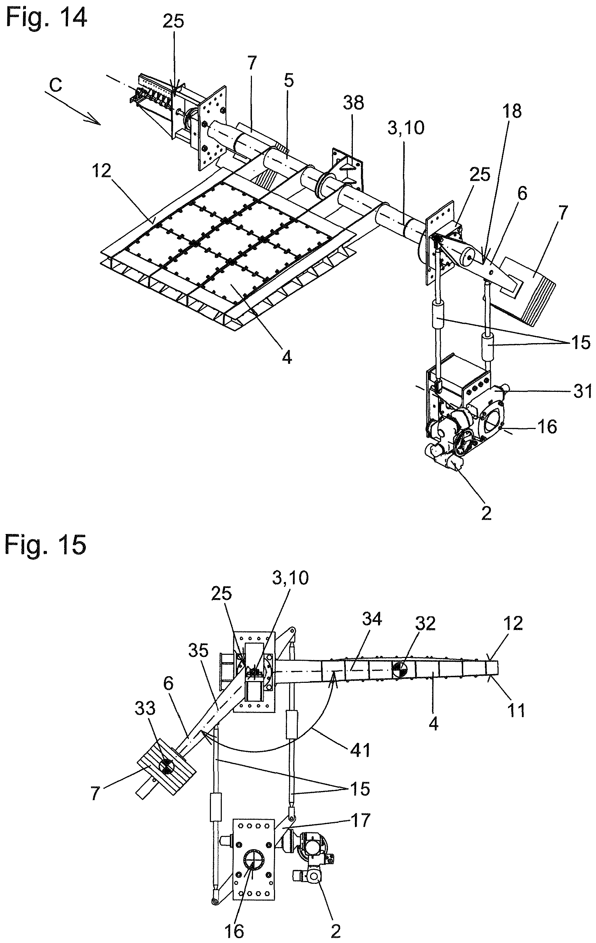

Ein erstes Ausführungsbeispiel einer erfindungsgemäßen Gasweiche ist in den Fig. 2 bis 15 dargestellt. Die Gasweiche 1 umfasst eine Eintrittsöffnung 22 zum Eintritt des Gasstroms in die Einströmrichtung 19, eine erste Austrittsöffnung 23 zum Austritt des Gasstromes in die erste Ausströmrichtung 20 und eine zweite Austrittsöffnung 24 zum Austritt des Gasstromes in die zweite Ausströmrichtung 21. Die Klappe 4 der Gasweiche 1 ist zwischen einer ersten und zweiten Schließstellung verstellbar und verschließt in der ersten Schließstellung die erste Austrittsöffnung 23 und in der zweiten Schließstellung die zweite Austrittsöffnung 24.

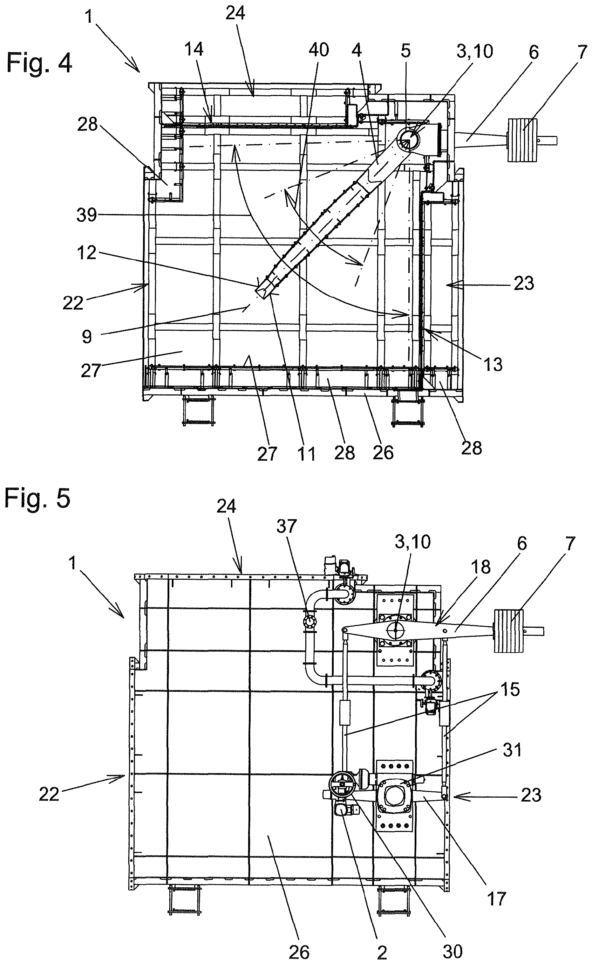

Die Gasweiche 1 weist ein Gehäuse 26 mit einem Innenraum auf, in dem die Klappe 4 angeordnet ist. Die Klappe 4 ist mit dem Gehäuse 26 zur Verstellung der Klappe 4 zwischen ihrer ersten und zweiten Schließstellung um eine Drehachse 3 verschwenkbar verbunden. Dazu ist die Klappe 4 mit einer Welle 5 verdrehfest verbunden, welche in am Gehäuse 26 vorgesehenen Lagerstellen 25 drehbar gelagert ist. Eine Verdrehung der Welle 5 gegenüber dem Gehäuse 26 führt zu einem Verschwenken der Klappe 4. Die Klappe 4 überstreicht bei ihrer Verschwenkung von der ersten in die zweite Schließstellung den Schwenkwinkel 39, vgl. Fig. 4.

Das Gehäuse 26 weist im Ausführungsbeispiel eine innerhalb einer äußeren Gehäusewand angeordnete Innenauskleidung 27 auf, welche einen Innenraum des Gehäuses 26 begrenzt, wobei in einem Zwischenraum 28 zwischen der Innenauskleidung 27 und der äußeren Gehäusewand Isoliermaterial (nicht dargestellt) zur thermischen Trennung der äußeren Gehäusewand vom den Innenraum durchströmenden Gasstrom angeordnet ist. Eine solche thermische Isolierung wird aufgrund der hohen Abgastemperaturen des Gasstromes verwendet, um die Wärmeverluste möglichst gering zu halten. Insbesondere ist es dadurch möglich, die Temperatur der äußeren Gehäusewand auf ein Maß zu bringen, das keine Gefährdung für das sich unter Umständen außerhalb der Gasweiche 1 aufhaltende Betriebspersonal darstellt.

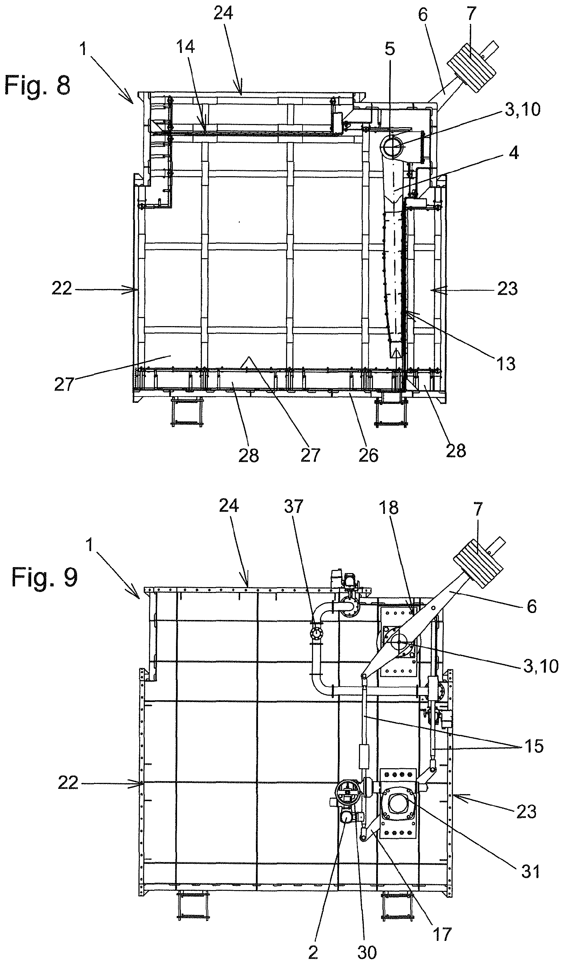

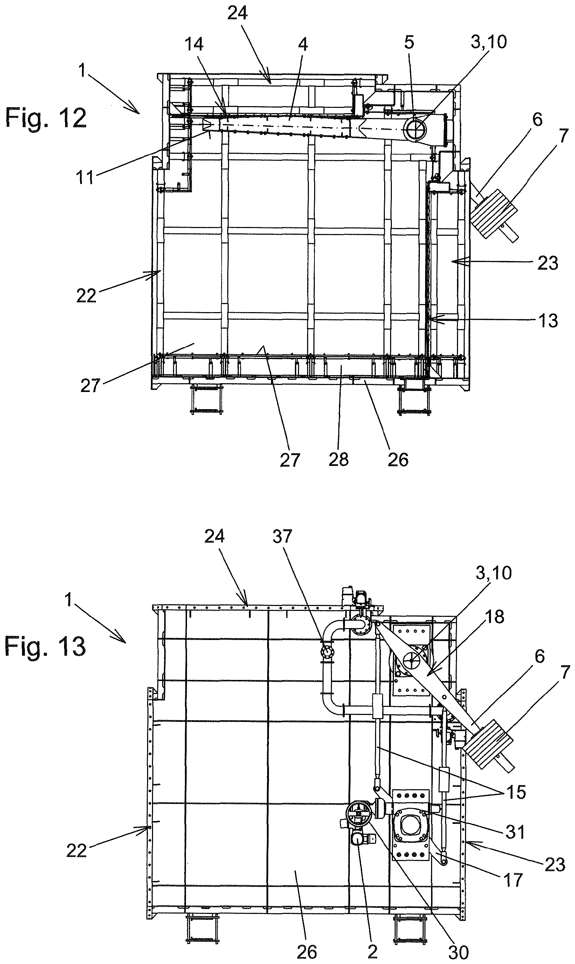

Die Klappe 4 liegt in ihrer ersten Schließstellung am ersten Dichtsitz 13 und in einer zweiten Schließstellung am zweiten Dichtsitz 14 an, vgl. Fig. 8 und Fig. 12. Die jeweiligen Dichtsitze 13, 14 sind am Gehäuse 26 festgelegt. Im Ausführungsbeispiel weist der jeweilige Dichtsitz 13, 14 eine Lamellendichtung auf, die die jeweilige Austrittsöffnung 20, 21 ringförmig umgibt. Die Klappe 4 besitzt erste und zweite Dichtflächen 11, 12, die mit den Lamellendichtungen des ersten und zweiten Dichtsitzes 13, 14 zusammenwirken. Wie bereits eingangs erwähnt, ist es auch möglich, die erste und zweite Dichtfläche 11, 12 am jeweiligen Dichtsitz 13, 14 und die Lamellendichtungen an der Klappe 4 anzuordnen.

Zwischen den in den Ausführungsbeispielen jeweils vollständig in einer Ebene liegenden Dichtflächen 11, 12 und der Lamellendichtung des jeweiligen Dichtsitzes 13, 14 wird ein die jeweilige Austrittsöffnung 23, 24 umgebender Sperrluftkanal ausgebildet, dem ein Sperrluftstrom zugeführt wird. Die Sperrluft besitzt einen gegenüber dem Abgasstrom ausgebildeten Überdruck, um den Durchtritt von Abgas durch den jeweiligen verschlossenen Dichtsitz 13, 14 beim Anliegen der Lamellendichtung an der jeweiligen Dichtfläche 11, 12 zu unterbinden und verhindert damit den Durchtritt von Abgasen der Gasturbine durch die jeweils verschlossene Austrittsöffnung 23, 24. Die Sperrluft wird durch die Sperrluftversorgung 37 in die Gasweiche eingebracht.

Der Vollständigkeit halber wird erwähnt, dass die Klappe 4 doppelt exzentrisch verschwenkbar gelagert ist, d.h. die Drehachse 3 liegt außerhalb des vom jeweiligen Dichtsitz 13, 14 umgebenden Bereichs und außerhalb der Ebene, in welcher die jeweilige Lamellendichtung in der entsprechenden Schließstellung an der zugehörigen Dichtfläche 11, 12 anliegt.

Die Gasweiche 1 weist im ersten Ausführungsbeispiel einen um eine Schwenkachse 10 drehbar gelagerten Hebelarm 6 auf, welcher mit der Welle 5 verdrehfest verbunden ist. Im ersten Ausführungsbeispiel sind die Schwenkachse 10 des Hebelarms 6 und die Drehachse 3 der Klappe 4 koinzident.

Die Gasweiche 1 weist ein an einem jeweiligen Hebelarm 6 angeordnetes Gegengewicht 7 auf, welches aufgrund des Eigengewichts des Gegengewichts 7 ein Drehmoment auf die Welle 5 ausübt. Es ist denkbar und möglich, dass die Gasweiche 1 auch nur einen oder mehr als zwei Hebelarme 6 mit einem daran angeordneten Gegengewicht 7 aufweist.

Im ersten Ausführungsbeispiel ist einer der das Gegengewicht 7 aufweisende Hebelarme 6 ein Teil eines Stellhebels 18. Der Stellhebel 18 ist über die beiden als Koppelstangen 15 ausgeführten Getriebeglieder mit dem Antriebshebel 17 verbunden, welcher um eine Achse 16 verschwenkbar ist. Die Koppelstangen 15 sind an ihren Enden einerseits mit dem Antriebshebel 17 und andererseits mit dem Stellhebel 18 gelenkig verbunden und übertragen die Bewegung des Antriebshebels 17 auf den Stellhebel 18. Es ist denkbar und möglich, nur eine Koppelstange 15 vorzusehen. Der Antriebsmotor 2 ist über ein Getriebe 31 mit dem Antriebshebel 17 verbunden, sodass der Antriebshebel 17 vom Antriebsmotor 2 um die Achse 16 verschwenkt werden kann. Zusätzlich weist das Ausführungsbeispiel ein Handrad 30 zur manuellen Verschwenkung des Antriebshebels 17 auf.

Die Koppelstangen 15 dienen neben der mechanischen Kopplung des Hebelarms 18 mit dem Antriebshebel 17 auch der thermischen Entkopplung des Antriebsmotors 2 von der zum Teil im Innenraum des Gehäuses und dem heißen Abgasstrom unterworfenen Teils der Welle 5. Im Ausführungsbeispiel ist vorgesehen, dass die Koppelstangen 15 eine elastische Deformation zulassen, dargestellt als verdickte Bereiche der Koppelstangen 15, um einen Längenausgleich zu ermöglichen. Durch die thermische Entkopplung sind insbesondere das Getriebe 31 und der Antriebsmotor 2 vor einer Temperaturbelastung durch die Wärmetransmission der Welle 5 geschützt. Das Festlager 38 dient dazu, dass sich die Welle 5 zu beiden Seiten unter Temperaturbelastung ausdehnen kann.

Der Antriebsmotor 2 ist im Ausführungsbeispiel als Elektromotor ausgeführt. Es ist denkbar und möglich, einen anderen, z.B. hydraulischen oder pneumatischen Antrieb zur Verstellung der Klappe 4 zu verwenden.

Die Figuren 5, 9 und 13 zeigen in einer Schnittdarstellung die unterschiedlichen Stellungen des Antriebshebels 17 und des damit gekoppelten Stellhebels 18. Die Koppelstangen 15 verbleiben in diesem Ausführungsbeispiel über den gesamten Schwenkwinkel des Antriebshebels 17 im Wesentlichen parallel zueinander liegend. Die Verschwenkung des Antriebshebels 17 um die Achse 16 führt in gleichem Maße zur Verschwenkung des Stellhebels 18 um die Schwenkachse 10. Es ist auch denkbar und möglich, zwischen dem Antriebshebel 17 und dem Stellhebel 18 eine mechanische Übersetzung zu realisieren.

Das erste Ausführungsbeispiel zeigt genau einen Antriebsmotor 2. Es könnten auch mehrere Antriebsmotoren 2 vorgesehen sein, welche mit jeweiligen Stellhebeln 18 gekoppelt sind, um die Verschwenkung der Welle 5 zu bewirken.

Die Klappe 4 und das Gegengewicht 7 erzeugen zusammen in der jeweiligen Schließstellung der Klappe 4 aufgrund des Eigengewichts der Klappe 4 und des Eigengewichts des Gegengewichts 7 ein Drehmoment um die Drehachse 3 der Klappe 4 in Richtung zur jeweils anderen Schließstellung. Hierbei werden ausschließlich das Eigengewicht der Klappe 4 und das Eigengewicht des Gegengewichtes 7 berücksichtigt. Abgesehen vom Schwerefeld der Erde wirken in dieser Betrachtung somit keine weiteren äußeren Kräfte auf die genannten Bauteile ein.

In Fig. 8 ist die Klappe 4 in ihrer ersten Schließstellung dargestellt, wobei die erste Dichtfläche 11 zur Anlage an der Lamellendichtung des ersten Dichtsitzes 13 kommt. Die erste Dichtfläche 11 liegt in der ersten Schließstellung der Klappe 4 im Wesentlichen in der Vertikalen. Die Klappe 4, nur für sich betrachtet, befindet sich in einer stabilen Gleichgewichtslage, da der Schwerpunkt der Klappe 4, in Richtung der Drehachse 3 der Klappe 4 gesehen, im Ausführungsbeispiel in einer Lage vertikal unterhalb der Drehachse 3 der Klappe 4 liegt, wobei eine Lage des Schwerpunkts der Klappe 4 in der ersten Schließstellung in einem Winkelbereich von +/- 5° bevorzugt ist. In anderen Worten ist in der vertikalen Stellung der Klappe 4 an der Drehachse 3 der Klappe 4 kein allein durch das Eigengewicht der Klappe 4 hervorgerufenes Drehmoment wirksam. Durch die verdrehstarre Verbindung des Hebelarms 6 mit der um die Drehachse 3 der Klappe 4 verdrehbaren Welle 5 wirkt in der ersten Schließstellung ein durch das Gegengewicht 7 hervorgerufenes Drehmoment um die Drehachse 3, in Richtung zur zweiten Schließstellung der Klappe 4.

In Fig. 12 ist die Klappe 4 in der zweiten Schließstellung dargestellt. Die zweite Dichtfläche 12 liegt dabei im Wesentlichen in der Horizontalen. Der Schwerpunkt 32 liegt in dieser Stellung im Ausführungsbeispiel horizontal neben der Drehachse 3 der Klappe 4. Das Drehmoment um die Drehachse 3 der Klappe 4 allein aufgrund des Eigengewichts der Klappe 4, ist in dieser Stellung maximal. Die Summe der beiden Drehmomente, hervorgerufen durch das Eigengewicht der Klappe 4 und das Gegengewicht 7 ergibt ein Summendrehmoment um die Drehachse 3 der Klappe 4 in Richtung zur ersten Schließstellung der Klappe 4.

Im Ausführungsbeispiel ist vorgesehen, dass das Drehmoment aufgrund des Eigengewichts der Klappe 4 in der ersten Schließstellung weniger als 5% des Drehmoments aufgrund des Eigengewichts der Klappe 4 in der zweiten Schließstellung der Klappe 4 beträgt. Das Drehmoment aufgrund des Eigengewichts des Gegengewichts 7 wirkt in diesem Ausführungsbeispiel in beiden Schließstellungen in die gleiche Richtung auf die Drehachse 3, wobei es in der zweiten Schließstellung der Klappe 4 dem vom Eigengewicht der Klappe 4 ausgeübten Drehmoment entgegenwirkt.

In einer Zwischenstellung zwischen den beiden Schließstellungen der Klappe 4 liegt aufgrund des Eigengewichts der Klappe 4 und des Eigengewichts des Gegengewichts 7 eine gemeinsame stabile Gleichgewichtslage vor, welche in einem Winkelbereich 40 von +/- 30° ausgehend von der Winkelhalbierenden 9 des Schwenkwinkels 39 der Klappe 4 zwischen erster und zweiter Schließstellung liegt, vgl. Fig. 2 bis 7. Im Ausführungsbeispiel liegt die Gleichgewichtslage bei der Winkelhalbierenden 9 zwischen der ersten und der zweiten Schließstellung der Klappe 4, vgl. Fig. 4. Eine Abweichung der Lage der Klappe 4 von der gemeinsamen stabilen Gleichgewichtslage erzeugt ein Summendrehmoment in Richtung zur gemeinsamen Gleichgewichtslage.

Es ist vorteilhaft, wenn die gemeinsame stabile Gleichgewichtslage der Klappe 4 und des Gegengewichts 7 in einem Winkelbereich 40 von +/- 15° ausgehend von der Winkelhalbierenden 9 des Schwenkwinkels 39 der Klappe 4 liegt.

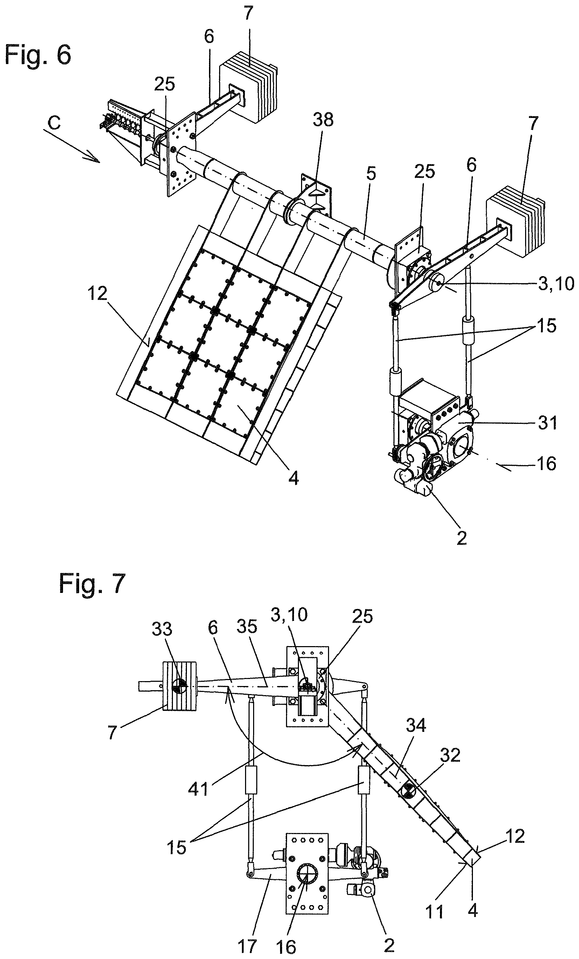

Fig. 7 zeigt die Stellung der Klappe 4 und des Hebelarms 6 zueinander. Im Ausführungsbeispiel ist vorgesehen, dass eine gedachte erste Verbindungslinie 34, die den Schwerpunkt 32 der Klappe 4 mit der Drehachse 3 der Klappe 4 verbindet, und eine gedachte zweite Verbindungslinie 35, die den Schwerpunkt des Gegengewichts 7 mit der Schwenkachse 10 des Hebelarms 6 verbindet, in Richtung der Drehachse 3 der Klappe 4 gesehen, einen Winkel 41 von 135° einschließt. Vorteilhafterweise beträgt der Winkel 41 weniger als 160°, vorzugsweise weniger als 150°, wobei ein Winkel 41 von mehr als 110°, vorzugsweise ein Winkel 41 von mehr als 120° bevorzugt ist.

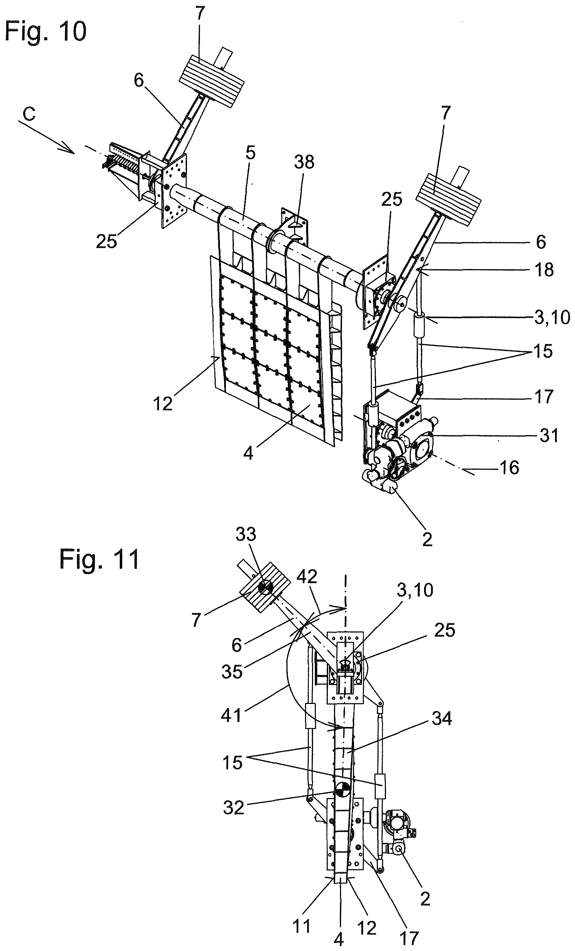

Im ersten Ausführungsbeispiel ist vorgesehen, dass bei vertikaler Stellung der Klappe 4 die gedachte zweite Verbindungsgerade 35, die den Schwerpunkt 33 des Gegengewichts 7 mit der Schwenkachse 10 des Hebelarms 6 verbindet, in Richtung der Schwenkachse 10 des Hebelarms 6 gesehen, gegenüber der Vertikalen um einen Winkel 42 von 45° geneigt ist, vgl. Fig. 11. Vorteilhafterweise beträgt der Winkel 42 mehr als 20°, vorzugsweise mehr als 30°, wobei ein Winkel 42 von weniger als 70°, vorzugsweise von weniger als 60°, bevorzugt ist.

Vorteilhafterweise beträgt die Summe der Massen der Gegengewichte 7, bzw. falls nur ein Gegengewicht vorhanden ist, die Masse des Gegengewichts 7 zumindest 20% der Masse der Klappe 4, vorzugsweise zumindest 30% der Masse der Klappe 4, vorteilhafterweise zumindest 40% der Masse der Klappe 4.

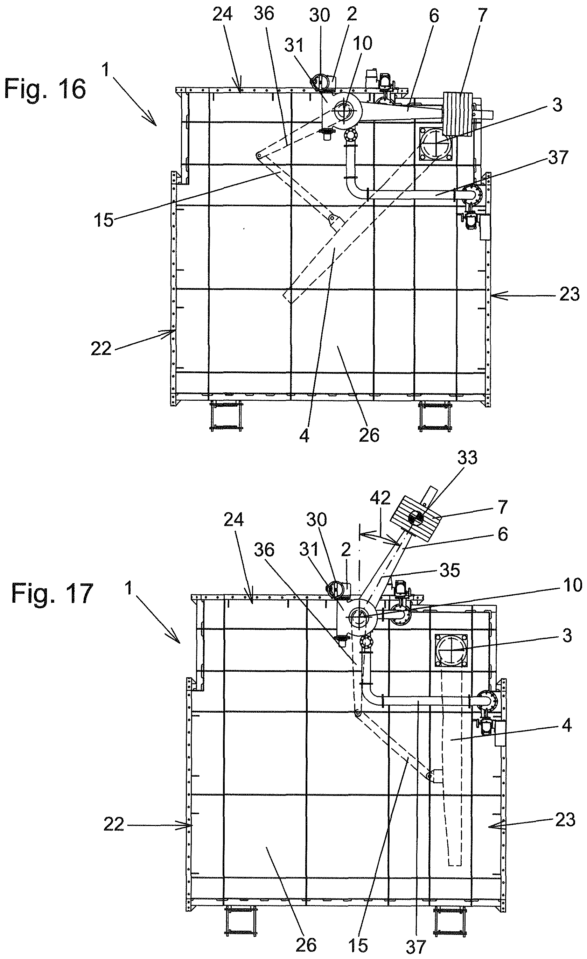

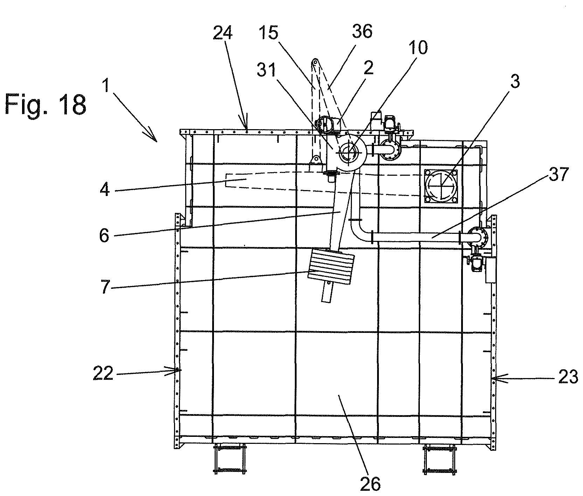

In den Fig. 16 bis 18 ist ein zweites Ausführungsbeispiel der erfindungsgemäßen Gasweiche 1 dargestellt. Im Folgenden werden die Unterschiede zum ersten Ausführungsbeispiel erläutert.
Die Klappe 4 ist an zwei Lagerstellen 25 gegenüber dem Gehäuse 26 um die Drehachse 3 verschwenkbar gelagert. Das Gegengewicht 7 ist am Hebelarm 6 angebracht, und um die Schwenkachse 10 verschwenkbar. Der Antriebsmotor 2 treibt über das Getriebe 31 eine mit dem Hebelarm 6 verdrehfest verbundene Welle an. Zur mechanischen Kopplung des Antriebsmotors 2 bzw. des Hebelarms 6 mit der Klappe 4 dient ein Getriebehebel 36 und eine Koppelstange 15, welche gelenkig einerseits mit dem Getriebehebel 36 andererseits mit der Klappe 4 verbunden ist.

Im zweiten Ausführungsbeispiel ist die mechanische Übersetzung zwischen dem Schwenkwinkel des Gegengewichtes 7 und dem Schwenkwinkel der Klappe 4 in der Zusammenschau der Fig. 16 bis 18 dargestellt. Auch hier gilt, dass die Klappe 4 und das Gegengewicht 7 zusammen in der jeweiligen Schließstellung aufgrund des Eigengewichts der Klappe 4 und des Eigengewichts des Gegengewichts 7 ein Drehmoment um die Drehachse 3 der Klappe 4 in Richtung zur jeweils anderen Schließstellung erzeugen. In Fig. 16 ist analog zum ersten Ausführungsbeispiel die gemeinsame stabile Gleichgewichtslage dargestellt.

Im zweiten Ausführungsbeispiel ist vorgesehen, dass bei vertikaler Stellung der Klappe 4 die gedachte zweite Verbindungsgerade 35, die den Schwerpunkt 33 des Gegengewichts 7 mit der Schwenkachse 10 des Hebelarms 6 verbindet, in Richtung der Schwenkachse 10 des Hebelarms 6 gesehen, gegenüber der Vertikalen um einen Winkel 42 von 30° geneigt ist, vgl. Fig. 17. Ein wesentlicher Unterschied des zweiten Ausführungsbeispiels vom ersten Ausführungsbeispiel besteht darin, dass die Schwenkachse 10 des Hebelarms 6 von der Drehachse 3 der Klappe 4 unterschiedlich ist, wobei Getriebeglieder 36, 15 zur Kopplung vorgesehen sind. Die Schwenkachse 10 und die Drehachse 3 liegen hierbei parallel zueinander.

Auch der Antrieb der Klappe 4 erfolgt über die Getriebeglieder 36, 15.

Das Gegengewicht 7 besteht in den Ausführungsbeispielen aus mehreren am Hebelarm 6 angebrachten Blechplatten. Die Anzahl der Blechplatten beeinflusst dabei die Lage des Schwerpunkts 33 des Gegengewichtes 7 und die Masse des Gegengewichtes 7. Die Anzahl der Blechplatten richtet sich nach der Größe der Gasweiche 1 und kann entsprechend angepasst werden.

In Summe ist es sowohl beim ersten als auch beim zweiten Ausführungsbeispiel möglich, die erforderliche Antriebsleistung des Antriebsmotors 2 gegenüber dem Stand der Technik wesentlich zu reduzieren, da das Losbrechen (= erforderliches Öffnungsmoment) der Klappe 4 in der jeweiligen Schließstellung durch das Gegengewicht 7 unterstützt wird.

Grundsätzlich ist es denkbar und möglich, die mechanische Kopplung zwischen dem Antriebsmotor 2 und der Welle 5 auf gänzlich andere Art als der gezeigten zu realisieren. Es ist möglich, die Kraftübertragung durch Ketten und Ritzelanordnungen, Bänder bzw. Riemen, Verzahnungen und andere im Stand der Technik an und für sich bekannte Methoden zur Kraftübertragung zu realisieren.

**Legende zu den Hinweisziffern:**

| | | | |
|---|---|---|---|
| 1 | Gasweiche | 23 | erste Austrittsöffnung |
| 2 | Antriebsmotor | 24 | zweite Austrittsöffnung |
| 3 | Drehachse | 25 | Lagerstelle |
| 4 | Klappe | 26 | Gehäuse |
| 5 | Welle | 27 | Innenauskleidung |
| 6 | Hebelarm | 28 | Zwischenraum |
| 7 | Gegengewicht | 29 | Schalldämpfer |
| 9 | Winkelhalbierende | 30 | Handrad |
| 10 | Schwenkachse | 31 | Getriebe |
| 11 | erste Dichtfläche | 32 | Schwerpunkt |
| 12 | zweite Dichtfläche | 33 | Schwerpunkt |
| 13 | erster Dichtsitz | 34 | erste Verbindungslinie |
| 14 | zweiter Dichtsitz | 35 | zweite Verbindungslinie |
| 15 | Koppelstange | 36 | Getriebehebel |
| 16 | Achse | 37 | Sperrluftversorgung |
| 17 | Antriebshebel | 38 | Festlager |
| 18 | Stellhebel | 39 | Schwenkwinkel |
| 19 | Einströmrichtung | 40 | Winkelbereich |
| 20 | erste Ausströmrichtung | 41 | Winkel |
| 21 | zweite Ausströmrichtung | 42 | Winkel |
| 22 | Eintrittsöffnung | | |

## Patentansprüche

1. Gasweiche (1), für den Gasstrom einer Abgasleitung einer Gasturbine, mit einer mittels eines Antriebsmotors (2) um eine Drehachse (3) zwischen einer ersten und einer zweiten Schließstellung verschwenkbaren Klappe (4), wobei die Klappe (4) bei ihrer Verschwenkung von der ersten in die zweite Schließstellung einen Schwenkwinkel (39) überstreicht, und wobei die Gasweiche (1) mindestens ein an einem, um eine Schwenkachse (10) drehbar gelagerten, Hebelarm (6) angeordnetes Gegengewicht (7) zur Ausübung eines auf die Klappe (4) um die Drehachse (3) wirkenden Drehmoments aufweist, **dadurch gekennzeichnet, dass** die Klappe (4) und das Gegengewicht (7) zusammen in der jeweiligen Schließstellung aufgrund des Eigengewichts der Klappe (4) und des Eigengewichts des Gegengewichts (7) ein Drehmoment um die Drehachse (3) der Klappe (4) in Richtung zur jeweils anderen Schließstellung erzeugen, und in einer Zwischenstellung zwischen den beiden Schließstellungen der Klappe (4) aufgrund des Eigengewichts der Klappe (4) und des Eigengewichts des Gegengewichts (7) eine gemeinsame stabile Gleichgewichtslage vorliegt, welche in einem Winkelbereich (40) von +/- 30° ausgehend von der Winkelhalbierenden (9) des Schwenkwinkels (39) der Klappe (4) zwischen erster und zweiter Schließstellung liegt.

2. Gasweiche (1) nach Anspruch 1, **dadurch gekennzeichnet, dass** die gemeinsame Gleichgewichtslage der Klappe (4) und des Gegengewichts (7) in einem Winkelbereich (40) von +/- 15°, ausgehend von der Winkelhalbierenden (9) des Schwenkwinkels (39) der Klappe (4) liegt.

3. Gasweiche (1) nach Anspruch 2, **dadurch gekennzeichnet, dass** die Schwenkachse (10) des Hebelarms (6) und die Drehachse (3) der Klappe (4) koinzident sind.

4. Gasweiche (1) nach Anspruch 3, **dadurch gekennzeichnet, dass** die Gasweiche (1) eine um die Drehachse (3) der Klappe (4) verdrehbare Welle (5) aufweist, wobei die Klappe (4) und der Hebelarm (6) verdrehstarr mit der Welle (5) verbunden sind.

5. Gasweiche (1) nach Anspruch 3 oder 4, **dadurch gekennzeichnet, dass** eine gedachte ersten Verbindungslinie (34), die den Schwerpunkt (32) der Klappe (4) mit der Drehachse (3) der Klappe (4) verbindet und eine gedachte zweite Verbindungslinie (35), die den Schwerpunkt (33) des Gegengewichts (7) mit der Schwenkachse (10) des Hebelarms (6) verbindet, in Richtung der Drehachse (3) der Klappe (4) gesehen, einen Winkel (41) von weniger als 160°, vorzugsweise einen Winkel (41) von weniger als 150°, einschließen.

6. Gasweiche (1) nach Anspruch 1 bis 5, **dadurch gekennzeichnet, dass** bei vertikaler Stellung der Klappe (4), eine gedachte zweite Verbindungslinie (35), die den Schwerpunkt (33) des Gegengewichts (7) mit der Schwenkachse (10) des Hebelarms (6) verbindet, in Richtung der Schwenkachse (10) des Hebelarms (6) gesehen, gegenüber der Vertikalen um einen Winkel (42) von mehr als 20°, vorzugsweise um einen Winkel (42) von mehr als 30°, geneigt ist.

7. Gasweiche (1) nach einem der Ansprüche 1 bis 6, **dadurch gekennzeichnet, dass** die Klappe (4) eine erste und zweite Dichtfläche (11,12) zur Anlage an einem jeweiligen Dichtsitz (13, 14) in der ersten und zweiten Schließstellung der Klappe (4) aufweist, wobei die erste Dichtfläche (11) in der ersten Schließstellung der Klappe (4) zumindest im Wesentlichen in der Vertikalen liegt.

8. Gasweiche (1) nach Anspruch 7, **dadurch gekennzeichnet, dass** die zweite Dichtfläche (12) in der zweiten Schließstellung der Klappe (4) zumindest im Wesentlichen in der Horizontalen liegt.

9. Gasweiche (1) nach einem der Ansprüche 1 bis 8, **dadurch gekennzeichnet, dass** die Masse des Gegengewichts (7) zumindest 20% der Masse der Klappe (4), vorzugsweise zumindest 30% der Masse der Klappe (4), beträgt.

10. Gasweiche (1) nach einem der Ansprüche 1 bis 9, **dadurch gekennzeichnet, dass** die Klappe (4) über zumindest ein Getriebeglied (15, 36) mit dem Antriebsmotor (2) mechanisch gekoppelt ist.

11. Gasweiche (1) nach Anspruch 10, **dadurch gekennzeichnet, dass** als Getriebeglied zur Verbindung der Klappe (4) mit dem Antriebsmotor (2) zumindest eine Koppelstange (15) vorgesehen ist.

12. Gasweiche (1) nach Anspruch 11, **dadurch gekennzeichnet, dass** die Gasweiche (1) zumindest einen mittels eines Antriebsmotors (2) um eine Achse (16) verschwenkbaren Antriebshebel (17) aufweist, und zwischen dem Antriebshebel (17) und einem mit der Welle (5) verdrehstarr verbundenen Stellhebel (18) zumindest eine Koppelstange (15) angeordnet ist.

13. Gasweiche (1) nach Anspruch 12, **dadurch gekennzeichnet, dass** der das Gegengewicht (7) aufweisende Hebelarm (6) ein Teil des Stellhebels (18) ist.

14. Gasweiche (1) nach einem der Ansprüche 1 bis 13, **dadurch gekennzeichnet, dass** der Antriebsmotor (2) ein Elektromotor ist.

## Claims

1. A gas flow diverter (1) for the gas flow of an exhaust pipe of a gas turbine, having a flap (4) pivotable about a rotational axis (3) between a first and a second closing position by means of a drive motor (2), wherein the flap (4) traverses a pivot angle (39) upon its pivoting from the first into the second closing position, and wherein the gas flow diverter (1) has at least one counterweight (7), arranged on a lever arm (6) rotatably mounted about a pivot axis (10), to exert torque acting upon the flap (4) about the rotational axis (3), **characterised in that** due to the dead weight of the flap (4) and the dead weight of the counterweight (7), the flap (4) and the counterweight (7) together generate in the given closing position torque about the rotational axis (3) of the flap (4) towards the other closing position in the case in question, and in an intermediate position between the two closing positions of the flap (4) there is a common, stable equilibrium position due to the dead weight of the flap (4) and the dead weight of the counterweight (7), which equilibrium position lies in an angular range (40) of +/- 30° starting from the angle bisector (9) of the pivot angle (39) of the flap (4) between first and second closing position.

2. A gas flow diverter (1) according to claim 1, **characterised in that** the common equilibrium position of the flap (4) and the counterweight (7) lies in an angular range (40) of +/- 15° starting from the angle bisector (9) of the pivot angle (39) of the flap (4).

3. A gas flow diverter (1) according to claim 2, **characterised in that** the pivot axis (10) of the lever arm (6) and the rotational axis (3) of the flap (4) are coincident.

4. A gas flow diverter (1) according to claim 3, **characterised in that** the gas flow diverter (1) has a shaft (5) rotatable about the rotational axis (3) of the flap (4), wherein the flap (4) and the lever arm (6) are connected to the shaft (5) in a torsionally-rigid manner.

5. A gas flow diverter (1) according to claim 3 or 4, **characterised in that** a notional first connection line (34), which connects the centre of gravity (32) of the flap (4) to the rotational axis (3) of the flap (4), and a notional second connection line (35), which connects the centre of gravity (33) of the counterweight (7) to the pivot axis (10) of the lever arm (6), enclose an angle (41) of less than 160°, preferably an angle (41) of less than 150°, viewed in the direction of the rotational axis (3) of the flap (4).

6. A gas flow diverter (1) according to claim 1 to 5, **characterised in that** when the flap (4) is in a vertical position, a notional second connection line (35), which connects the centre of gravity (33) of the counterweight (7) to the pivot axis (10) of the lever am (6), is inclined by an angle (42) to the vertical of more than 20°, preferably by an angle (42) of more than 30°, viewed in the direction of the pivot axis (10) of the lever arm (6).

7. A gas flow diverter (1) according to any one of claims 1 to 6, **characterised in that** the flap (4) has a first and second sealing surface (11, 12) for contact against a respective sealing seat (13, 14) in the first and second closing position of the flap (4), wherein in the first closing position of the flap (4), the first sealing surface (11) lies at least substantially vertically.

8. A gas flow diverter (1) according to claim 7, **characterised in that** in the second closing position of the flap (4), the second sealing surface (12) lies at least substantially horizontally.

9. A gas flow diverter (1) according to any one of claims 1 to 8, **characterised in that** the mass of the counterweight (7) amounts to at least 20% of the mass of the flap (4), preferably at least 30% of the mass of the flap (4).

10. A gas flow diverter (1) according to any one of claims 1 to 9, **characterised in that** the flap (4) is mechanically coupled to the drive motor (2) via at least one link (15, 36).

11. A gas flow diverter (1) according to claim 10, **characterised in that** at least one coupling bar (15) is provided as a link to connect the flap (4) to the drive motor (2).

12. A gas flow diverter (1) according to claim 11, **characterised in that** the gas flow diverter (1) has at least one drive lever (17) pivotable about an axis (16) by means of a drive motor (2), and at least one coupling bar (15) is arranged between the drive lever (17) and an adjusting lever (18) connected to the shaft (5) in a torsionally-rigid manner.

13. A gas flow diverter (1) according to claim 12, **characterised in that** the lever arm (6) having the counterweight (7) is a part of the adjusting lever (18).

14. A gas flow diverter (1) according to any one of claims 1 to 13, **characterised in that** the drive motor (2) is an electric motor.

## Revendications

1. Déflecteur de flux gazeux (1), pour le flux de gaz d'une conduite des gaz d'échappement d'une turbine à gaz, comprenant un clapet (4) pouvant pivoter autour d'un axe de rotation (3) entre une première et une deuxième position de fermeture au moyen d'un moteur d'entraînement (2), dans lequel le clapet (4), lors de son pivotement de la première à la deuxième position de fermeture, balaye un angle de pivotement (39), et dans lequel le déflecteur de courants gazeux (1) comprend au moins un contrepoids (7), qui est agencé sur un bras de levier (6) monté de manière à pouvoir tourner autour d'un axe de pivotement (10) et qui est destiné à exercer un couple agissant sur le clapet (4) autour de l'axe de rotation (3), **caractérisé en ce que** le clapet (4) et le contrepoids (7) produisent conjointement dans la position de fermeture respective, du fait du poids propre du clapet (4) et du poids propre du contrepoids (7), un couple autour de l'axe de rotation (3) du clapet (4) en direction de l'autre position de fermeture, et un état d'équilibre stable commun est établi dans une position intermédiaire entre les deux positions de fermeture du clapet (4) du fait du poids propre du clapet (4) et du poids propre du contrepoids (7), l'état d'équilibre stable commun se situant dans une plage angulaire (40) de ± 30° à partir de la bissectrice (9) de l'angle de pivotement (39) du clapet (4) entre la première et la deuxième position de fermeture.

2. Déflecteur de courants gazeux (1) selon la revendication 1, **caractérisé en ce que** l'état d'équilibre commun du clapet (4) et du contrepoids (7) se situe dans une plage angulaire (40) de ± 15°, à partir de la bissectrice (9) de l'angle de pivotement (39) du clapet (4).

3. Déflecteur de courants gazeux (1) selon la revendication 2, **caractérisé en ce que** l'axe de pivotement (10) du bras de levier (6) et l'axe de rotation (3) du clapet (4) sont coïncidents.

4. Déflecteur de courants gazeux (1) selon la revendication 3, **caractérisé en ce que** le déflecteur de courants gazeux (1) comprend un arbre (5) pouvant tourner selon l'axe de rotation (3) du clapet (4), dans lequel le clapet (4) et le bras de levier (6) sont reliés à l'arbre (5) de manière solidaire en rotation.

5. Déflecteur de courants gazeux (1) selon la revendication 3 ou 4, **caractérisé en ce qu'**une première ligne de liaison imaginaire (34), qui relie le centre de gravité (32) du clapet (4) à l'axe de rotation (3) du clapet (4), et une deuxième ligne de liaison imaginaire (35), qui relie le centre de gravité (33) du contrepoids (7) à l'axe de pivotement (10) du bras de levier (6), vu en direction de l'axe de rotation (3) du clapet (4), forment un angle (41) inférieur à 160°, de préférence un angle (41) inférieur à 150°.

6. Déflecteur de courants gazeux (1) selon les revendications 1 à 5, **caractérisé en ce que**, lorsque le clapet (4) se trouve dans la position verticale, une deuxième ligne de liaison imaginaire (35), qui relie le centre de gravité (33) du contrepoids (7) à l'axe de pivotement (10) du bras de levier (6), est inclinée, vu en direction de l'axe de pivotement (10) du bras de levier (6), par rapport à la verticale d'un angle (42) supérieur à 20°, de préférence d'un angle (42) supérieur à 30°.

7. Déflecteur de courants gazeux (1) selon l'une quelconque des revendications 1 à 6, **caractérisé en ce que** le clapet (4) comprend une première et une deuxième surface d'étanchéité (11, 12) destinées à être en appui contre un siège d'étanchéité (13, 14) respectif dans la première et la deuxième position de fermeture du clapet (4), dans lequel la première surface d'étanchéité (11), dans la première position de fermeture du clapet (4), se situe au moins sensiblement à la verticale.

8. Déflecteur de courants gazeux (1) selon la revendication 7, **caractérisé en ce que** la deuxième surface d'étanchéité (12), dans la deuxième position de fermeture du clapet (4), se situe au moins sensiblement à l'horizontale.

9. Déflecteur de courants gazeux (1) selon l'une quelconque des revendications 1 à 8, **caractérisé en ce que** la masse du contrepoids (7) atteint au moins 20 % de la masse du clapet (4), de préférence au moins 30 % de la masse du clapet (4).

10. Déflecteur de courants gazeux (1) selon l'une quelconque des revendications 1 à 9, **caractérisé en ce que** le clapet (4) est accouplé mécaniquement au moteur d'entraînement (2) par l'intermédiaire d'au moins un organe de transmission (15, 36).

11. Déflecteur de courants gazeux (1) selon la revendication 10, **caractérisé en ce qu'**au moins une barre d'accouplement (15) est prévue comme organe de transmission pour la liaison du clapet (4) au moteur d'entraînement (2).

12. Déflecteur de courants gazeux (1) selon la revendication 11, **caractérisé en ce que** le déflecteur de courants gazeux (1) comprend au moins un levier d'entraînement (17) pouvant pivoter autour d'un axe (16) au moyen d'un moteur d'entraînement (2), et au moins une barre d'accouplement (15) est agencée entre le levier d'entraînement (17) et un levier de commande (18) relié de manière solidaire en rotation à l'arbre (5).

13. Déflecteur de courants gazeux (1) selon la revendication 12, **caractérisé en ce que** le bras de levier (6) comprenant le contrepoids (7) fait partie du levier de commande (18).

14. Déflecteur de courants gazeux (1) selon l'une quelconque des revendications 1 à 13, **caractérisé en ce que** le moteur d'entraînement (2) est un moteur électrique.
